Europäisches Patentamt

(19) **European Patent Office**

**Office européen des brevets**

(11) Numéro de publication: **0 005 113**

**B1**

(12) **FASCICULE DE BREVET EUROPEEN**

(45) Date de publication du fascicule de brevet: **12.08.81**

(51) Int. Cl.³: **C 05 F 3/00**

(21) Numéro de dépôt: **79400246.9**

(22) Date de dépôt: **13.04.79**

(54) **Procédé et installation pour la désodorisation et la transformation en engrais du lisier de porc.**

(30) Priorité: **17.04.78 FR 7811170**

(43) Date de publication de la demande:
**31.10.79 Bulletin 79/22**

(45) Mention de la délivrance du brevet:
**12.08.81 Bulletin 81/32**

(84) Etats Contractants Désignés:
**BE DE GB NL**

(56) Documents cités:
**FR - A - 2 020 516**
**FR - A - 2 371 399**
**NL - A - 6 902 007**

(73) Titulaire: **Delaunay, Jean-Paul**
**Loumel Vessey**
**F-50170 Pontorson (FR)**

(72) Inventeur: **Delaunay, Jean-Paul**
**Loumel Vessey**
**F-50170 Pontorson (FR)**

(74) Mandataire: **Chevallier, Robert et al,**
**Cabinet BOETTCHER 23, rue La Boétie**
**F-75008 Paris (FR)**

Courier Press, Leamington Spa, England.

Procédé et installation pour la désodorisation et la transformation en engrais du lisier de porc.

Procédé et installation pour la désodorisation et la transformation en engrais du lisier de porc.

L'invention a pour objet un procédé et une installation en vue de traiter en plusieurs opérations successives du lisier de porc pour obtenir sans odeurs gênantes, d'une part une matière solide, d'autre part une matière liquide, utilisables comme engrais.

On connaît déjà dans le commerce des appareils et des installations conçus pour le même résultat. Certains n'éliminent que très imparfaitement les odeurs, d'autres font appel à des machines coûteuses telles que des centrifugeuses pour faire la séparation des matières solides et des matières liquides.

L'état de la technique est illustré de manière assez précise par le brevet français n° 2.020.516. Cependant on doit reconnaître que le procédé préconisé dans ce brevet n'est pas satisfaisant pour l'exploitation des porcheries actuelles conformément aux méthodes d'élevage pratiquées maintenant. Selon l'enseignement apporté par ce brevet, on lave les porcheries avec une grande quantité d'eau de lavage à laquelle on ajoute une quantité relativement faible d'un amendement calcaire et d'un chlorure ferrique, au moins, par exemple 10 g de chaux par m³ et 20 g de chlorure ferrique par m³. Cette eau dilue fortement le lisier et les adjuvants utilisés en quantité aussi faible n'ont pas d'autre rôle que de provoquer une floculation rapide qui permet de procéder aussitôt à une séparation physique par filtration ou centrifugation.

Selon les méthodes actuelles d'élevage des porcs, on évite le plus possible le lavage à l'eau et la dilution du lisier; celui-ci est recueilli totalement à l'etat naturel. Le procédé du brevet cité n'est donc pas adapté aux besoins actuels. D'autre part, l'emploi de l'eau de lavage pour traiter le lisier comporte une grande incertitude sur le dosage réalisé en raison de la variation même du volume de l'eau utilisée pour le lavage.

Or, si l'on veut se servir finalement du lisier comme engrais, il est nécessaire de le traiter de manière à ce qu'il n'ait pas d'effet défavorable sur les sols, en dépit de sa grande agressivité. Il est même souhaitable que le lisier traité et utilisé finalement comme engrais contribue à amender les sols.

Le brevet français n° 2.371.399 décrit un procédé et un dispositif conçus pour traiter le lisier de porc en vue d'en obtenir un engrais ou un produit de base de l'alimentation de ces animaux. Selon ce brevet, on doit mesurer et contrôler en permanence le pH du lisier que l'on traite par un amendement calcaire. Cette obligation n'est pas facilement observée dans les fermes. En outre, on prévoit bien de laisser se produire une décantation des matières solides et, aussi, d'effectuer une opération d'aération, mais ce brevet recommande de soumettre à l'aération la totalité du lisier traité ou de faire un recyclage des matières solides après leur séparation du liquide. Le dispositif comprend donc des appareils relativement importants qui sont réunis par des tuyauteries et des moyens d'agitation et de circulation. Un tel investissement se révèle assez souvent comme hors des possibilités des fermes moyennes.

Le but de l'invention est donc de traiter du lisier de porc à l'état naturel, sans adjonction d'eau de lavage ou de dilution, pour en supprimer dans le temps le plus court les odeurs indésirables, totalement ou presque totalement, afin de parvenir grâce à une installation simple économique à réaliser, à exploiter et à entretenir, à un produit utilisable comme engrais que ne risque pas de dégrader les sols et, de préférence, qui contribue à leur amélioration en rendant inutiles d'autres amendements calcaires.

Le procédé de l'invention vise donc à traiter du lisier naturel par une incorporation importante d'amendement calcaire (à un niveau 800 fois plus élevé que celui qui est indiqué dans le brevet n° 2.02.216), afin de parvenir à un engrais susceptible d'améliorer les sols et rendant inutiles certains autres amendements.

On atteint ce but, selon l'invention, en opérant de la façon suivante: on recueille le lisier et on lui ajoute un amendment calcaire tel que du carbonate de calcium en quantité de l'ordre de 100 kilos pour 12 m³ de lisier, approximativement, on laisse reposer le mélange pendant 3 à 6 jours de préférence quatre jours environ, au cours desquels se produisent une floculation et une décantation de matières solides recouvertes de liquide. On sépare la partie liquide de la partie solide, de préférence en faisant passer le tout a l'aide d'une pompe, en aspirant d'abord le liquide puis progressivement la matière humide qui est de plus en plus concentrée vers le fond, dans un séparateur qui fournit la partie liquide, que l'on envoie dans un bassin d'oxygénation, et la partie solide qu'on dépose sur une de stockage; on soumet dans ce bassin la partie liquide à une oxygénation par soufflage d'air et à une évaporation de 40% environ de son volume initial.

De préférence, on réalise l'oxygénation par insufflation d'air sous pression au sein de la partie liquide en fonction de la teneur en gaz ammoniac contrôlée par des détecteurs plongeant dans le liquide.

La fraction liquide qui reste apprès oxygénation et évaporation peut servir à l'épandage sur des terres de culture.

Une installation permettant la mise en oeuvre du procédé de l'invention comprend une première fosse de mélange dans laquelle on recueille le lisier et on y ajoute l'amendement calcaire; une fosse double de floculation et de décantation dont l'on remplit alternativement les deux compartiments en lisier amendé de la première fosse et que l'on vide alternativement de préférence après quatre jours de décantation; un séparateur alimenté en alternance à partir de l'un ou l'autre compartiment de la fosse double, ce séparateur étant de préference du type comprenant un tamis à passage de 500 microns environ; une aire de stockage pour les matières solides venant du séparateur; un bassin d'oxygénation couvert, de préférence en matériau transparent, ayant des ouvertures réglables d'évaporation et associé à un équipment d'insufflation d'air sous pression au sein du liquide sous le contrôle de détecteurs d'ammoniac plongeant dans ce dernier.

Pour mieux apprécier l'invention on donnera maintenant une description d'un exemple d'une installation; on se reportera au dessin annexé dans lequel:

— la figure 1 est une vue générale schématique de dessus d'une installation conforme à l'invention.

— la figure 2 est une vue en élévation, en partie en coupe, de la même installation.

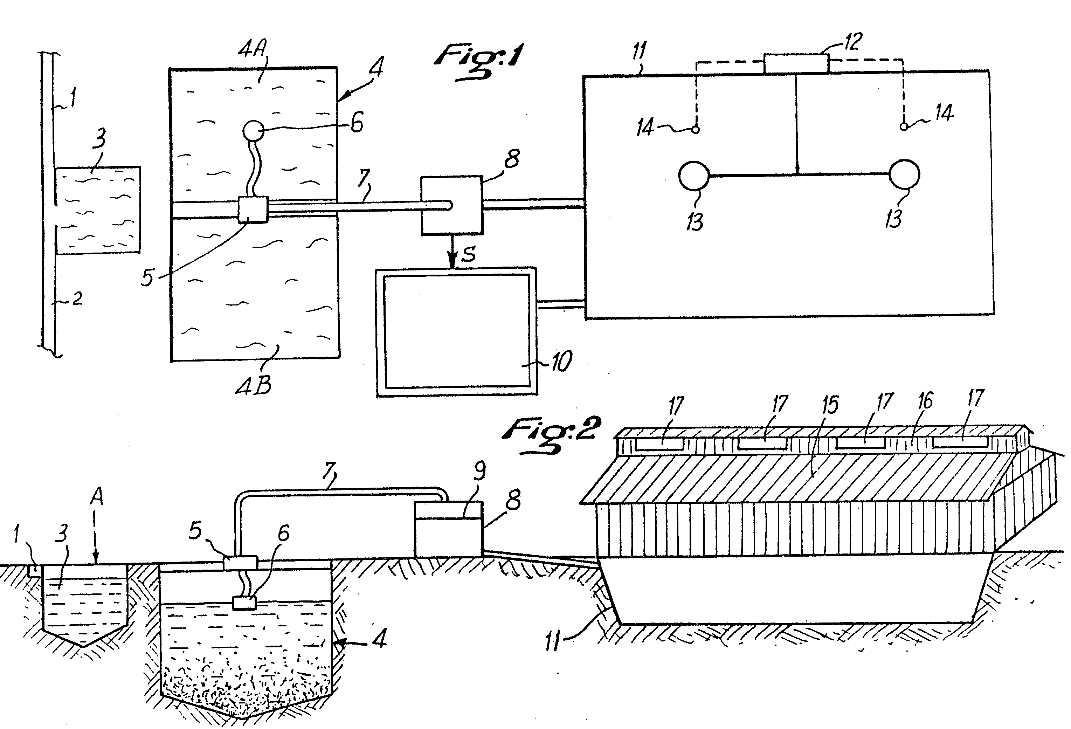

Dans l'installation décrite ici, le lisier de porc arrive par deux rigoles 1, 2 en provenance d'une porcherie ayant deux parties symétriques et il est recueilli dans une première fosse de mélange 3 où on ajoute un amendement calcaire comme symbolisé par une flèche A sur la figure 2. Tout amendement calcaire connu disponible peut convenir. Pour une raison de coût, il est préférable actuellement d'utiliser du carbonate de calcium en quantité de l'ordre de 100 kilos pour 12 m³ de lisier environ. On pourrait faire cette adjonction directement dans les rigoles 1, 2 et supprimer la première fosse 3. Cette dernière facilite le dosage et le mélange du lisier avec l'amendement calcaire.

Après exécution de cette opération, on envoie le mélange dans une fosse double 4 ayant un compartiment 4A et un compartiment 4B. Pour une porcherie produisant 12m³ de lisier par jour, la première fosse 3 a de préférencé une contenance de 12m³ et chaque compartiment 4A, 4B a une contenance de 80m³. De cette façon, après adjonction de 100 kilos de carbonate de calcium au lisier qui remplit chaque jour la première fosse 3, on envoie le contenu de celle-ci, à l'aide, par exemple, de moyens de pompage non représentés, dans le compartiment 4A dont le remplissage demande six jours environ. On laisse alors se faire dans ce compartiment, pendant une durée se situant entre 3 et 6 jours, de quatre jours dans cet exemple, une opération de floculation et de décantation pendant que l'on remplit de compartiment 4B. La matière organique se rassemble au fond.

L'addition du carbonate de calcium a pour effet de réduire fortement l'émission de gaz malodorants et de renforcer le processus de floculation. Les mauvaises odeurs du lisier sont dues aux amines et aux mercaptans. L'amendement calcaire tamponne le milieu à un pH d'environ 7. Les mercaptans gazeux et acides restent dans le milieu sous forme de sels ou de complexes dissous et ne se dégagent pas. Par ailleurs, les amines et l'ammoniac gazeux basiques ne se dégagent pas non plus parce qu'ils forment avec le carbonate de calcium du carbonate d'ammonium. Il n'y a donc pas de dégagement d'ammoniac et l'ion calcium libéré favorise la floculation des composés organiques.

La fosse 4 est équipée d'un poste de pompage 5 capable d'aspirer dans l'un ou l'autre des deux compartiments 4A, 4B à l'aide d'une tête d'aspiration flottante 6. Pendant le pompage, cette dernière descend en même temps que le niveau en aspirant d'abord le liquide qui surnage puis, progressivement, un milieu de plus en plus chargé en matières solides. Le produit aspiré est refoulé par une canalisation 7 à une station de séparation 8. Celle-ci est d'un type quelconque approprié. Toutefois, il est suffisant selon le procédé de l'invention, d'employer un séparateur comprenant un tamis 9 ayant une ouverture de passage de mailles de 500 microns environ et pouvant être choisie entre 400 et 700 microns.

Bien qu'un séparateur à tamis soit préférable, on notera que son emploi n'est pas strictement nécessaire, principalement quand les quantités traitées sont faibles. Toute surface permettant une séparation rapide de la partie liquide et de la partie solide peut convenir.

Aprés séparation, la partie solide est déposée sur une aire de stockage 10, comme indiqué par une flèche S sur la figure 1, pour un égouttage final et un sèchage. Cette aire de stockage 10 pourrait jouer le rôle du séparateur 8.

Le liquide provenant du séparateur 8 ainsi que celui qui s'égoutte de la matière solide déposée sur l'aire 10 sont envoyés dans un bassin d'oxygénation 11. Dans le présent exemple, ce dernier a une capacité de 600 m³. Il est associé à un groupe 12 (figure 1) qui commande le fonctionnement de deux turbines d'oxygénation 13 immergées dans le liquide. Ces dernières sont d'un type quelconque approprié assurant une diffusion aussi bonne que possible del'air au sein du liquide. L'oxygénation se fait sous le contrôle de deux détecteurs 14 de gaz ammoniac qui plongent dans le liquide.

En outre, comme le montre la figure 2, le bassin 11 est couvert en totalité par une charpente supportant des panneaux en matière transparente 15 choisis pour avoir un effet de serre. Un lanterneau 16 ayant des ouvertures règlables 17 complète la charpente.

Les panneaux 15 protègent le bassin 11 de la pluie et produisent une concentration intérieure de chaleur qui favorise l'évaporation de l'eau. On laisse le liquide se réduire de 40% environ de son volume initial en même temps qu'on le désodorise par oxygénation sous le contrôle des détecteurs 14. Après ce traitement, on obtient un liquide non odorant qui peut être répandu sur les terres de culture.

De même, la partie solide déposée sur l'aire de stockage 10 est utilisable comme matière organique humide lorsqu'on l'a laissée s'égoutter et sècher suffisamment. Elle n'a plus qu'une odeur faible.

On remarquera que le procédé de l'invention supprime en grande partie les odeurs gênantes, permet une récupération totale comme engrais des parties liquide et solide du lisier, en ne faisant appel, pour sa mise en oeuvre, qu'à des moyens matériels simples dont le fonctionnement et l'entretien n'entraînent qu'à une dépense modérée.

Ainsi qu'on l'a montré au cours de la description, plusieurs variantes peuvent être apportées à l'invention sans qu'on sorte pour autant de son cadre ou de son esprit. Par exemple, la quantité de carbonate de calcium indiquée plus haut a été déterminée d'après une production moyenne théorique de 8 l de lisier par jour et par animal. Elle pourrait être modifiée en fonction de la production réelle et d'un autre corps calcaire utilisé qui jouerait le même rôle que le carbonate de calcium.

De même, le procédé de l'invention peut être mis en oeuvre pour le lisier des bovins moyennant une adaptation de la quantité d'amendement calcaire à y ajouter et du débit d'air à employer pour l'oxygénation. Afin de faciliter cette détermination, on précisera ici que l'on a admis, dans l'exemple décrit plus haut, qu'un porc produit environ 8 l de lisier par jour équivalent à une demande biologique en oxygène après 5 jours (DB05) de 150 g.

On notera qu'il peut être utile dans certaines circonstances d'abriter de la pluie l'aire de stockage 10 à l'aide d'une simple toiture et qu'il est avantageux de prévoir alors une couverture en matériau transparent afin de profiter du rayonnement solaire pour accélérer le sèchage de la partie solide provenant du lisier.

C'est pour la même raison que le bassin 11 est recouvert, de préférence, de panneaux transparents 15. En variante, le bassin 11 pourrait être abrité à l'aide de panneaux opaques et un chauffage modéré pourrait être réalisé à l'aide d'un circuit de récupération de chaleur. En outre, un tel circuit de récupération pourrait être combiné avec une couverture transparente permettant l'exploitation de la chaleur solaire.

Des expériences réelles ont été effectuées sur des parcelles de terre cultivée afin de vérifier l'effet de l'épandage en quantité importante du lisier traité selon le procédé de l'invention. Sur des parcelles dont le sol avait un pH 5,9 en avril 1978, on a répandu en Mai 80 m³/ha de lisier de porcs. En juin 1978, le pH mesuré était de 5,7 mais en Octobre 1978, sans adjonction d'amendement de calcaire, il était de 6,1. On peut en déduire que le procédé de l'invention a deux avantages importants: il supprime toute adjonction d'eau au lisier; il donne un produit final qui, de façon certaine, ne nuit pas au sol et, au contraire, tend à l'améliorer en l'absence de tout autre amendement calcaire.

## Revendications

1. Procédé pour le traitement du lisier de porcs selon lequel on ajoute un amendement calcaire au lisier naturel, on laisse décanter le mélange et on envoie la partie liquide dans un bassin d'oxygénation pour la soumettre à une oxygénation par soufflage d'air, caractérisé en ce qu'on ajoute une quantité d'amendement calcaire de l'ordre de 100 kilos pour 12 m³ de lisier naturel, on laisse reposer dans un bassin de décantation pendant une durée de 3 à 6 jours, on sépare la partie liquide de la partie solide, on envoie la partie liquide dans le bassin d'oxygénation où on la soumet à une évaporation de 40% environ de son volume initial, on laisse reposer la partie solide sur une aire de stockage, après quoi les deux parties sont utilisables comme engrais.

2. Procédé selon la revendication 1 caractérisé en ce qu'après une durée de décantation de 4 jours, on retire les deux partie solide et liquide du bassin de décantation, par pompage, en commençant par le liquide surnageant et on sépare ces deux parties en envoyant le produit pompé dans un séparateur ayant des mailles choisies dans une gamme de 400 à 700 microns.

3. Procédé selon la revendication 2 caractérisé en ce qu'on choisit des mailles de 500 microns.

4. Procédé selon la revendication 3 caractérisé en ce que l'on recueille le liquide s'égouttant de l'aire de stockage et on l'envoie dans le bassin d'oxygénation.

5. Procédé selon la revendication 1 caractérisé en ce que l'on retire les deux parties solide et liquide du bassin de décantation, par pompage, en commençant par le liquide surnageant et on réalise la séparation du liquide et des matières solides en déposante le tout sur l'aire de stockage dont on recueille le liquide qui s'égoutte pour l'envoyer dans le bassin d'oxygénation.

6. Procédé selon l'une quelconque des revendications 1 à 5, caractérisé en ce qu'on utilise le carbonate de calcium comme amendement calcaire.

7. Procédé selon la revendication 1 caractérisé en ce qu'on oxygène la partie liquide sous le contrôle de détecteurs de gaz ammoniac plongeant dans ce liquide.

8. Installation pour la mise en oeuvre du procédé selon l'une des revendications 1 à 4, 6 et 7, caractérisé en ce qu'elle comprend une première fosse de mélange du lisier et de l'amendement calcaire, une fosse double de floculation et de décantation, un séparateur de liquide et de matières solides destiné à être alimenté en alternance à partir de l'une ou de l'autre moitié de la fosse double, une aire de stockage destinée à recevoir la partie solide provenant du séparateur, un bassin d'oxygénation couvert ayant des ouvertures réglables d'évaporation, un équipement d'insufflation d'air sous pression au sein du liquide contenu dans le bassin, des détecteurs de gaz ammoniac plongeant dans ce liquide pour contrôler le fonctionnement de l'équipement d'insufflation d'air.

9. Installation selon la revendication 8 caractérisé en ce que le séparateur est du type à tamis ayant un passage de mailles de 500 microns environ, ce séparateur ayant une sortie de liquide raccordée au bassin d'oxygénation et étant associé à une aire de stockage destinée à recevoir la partie solide, cette air de stockage étant raccordée au bassin d'oxygénation pour y envoyer le liquide d'égouttage.

10. Installation selon la revendication 8 caractérisé en ce que le bassin couvert au moins en partie à l'aide de matériau transparent permettant la récupération de la chaleur solaire.

## Claims

1. Process for the treatment of pigs' excreta whereby a calcareous ameliorator is added to the natural liquid excreta, the mixture is left to decant and the liquid part is sent into an oxygenation tank to subject it to oxygenation by blowing of air, characterised in that a quantity of calcareous ameliorator of the order of 100 kilos is added for 12 m³ of natural liquid excreta, the mixture is left to stand in a decantation tank for a period of 3 to 5 days, the liquid part is separated from the solid part, the liquid part is sent into the oxygenation tank where it is subjected to an evaporation of about 40% of its initial volume, the solid part is left to stand on a storage area, after which the two parts can be used as manure.

2. Process according to Claim 1, characterised in that, after a period of decantation of 4 days, the two solid and liquid parts are removed from the decantation tank by pumping, starting with the supernatant liquid and these two parts are separated by sending the pumped product into a separator having meshes selected in a range of 400 to 700 microns.

3. Process according to Claim 2, characterised in that meshes of 500 microns are chosen.

4. Process according to Claim 3, characterised in that the liquid draining from the storage area is collected and sent into the oxygenation tank.

5. Process according to Claim 1, characterised in that the two solid and liquid parts are removed from the decantation tank by pumping, starting with the supernatant liquid and the liquid and the solid matter are separated by depositing all on the storage area from which the liquid which drains off is collected and sent into the oxygenation tank.

6. Process according to any one of Claims 1 to 5, characterised in that calcium carbonate is used as calcareous ameliorator.

7. Process according to Claim 1, characterised in that the liquid part is oxygenated under the control of ammonia gas detectors immersed in this liquid.

8. Installation for carrying out the process according to one of Claims 1 to 4, 6 and 7, characterised in that it comprises a first pit (3) for mixture of the excreta and of the calcareous ameliorator, a double flocculation and decantation pit (4), a separator (8) for separating liquid and solid matter adapted to be supplied alternately from one (4A) or the other half (4B) of the double pit (4), a storage area (10) adapted to receive the solid part coming from the separator (8), a covered oxygenation tank (11) having adjustable openings (17) for evaporation, an equipment (12, 13) for blowing air under pressure into the liquid contained in the tank (11), ammonia gas detectors (14) immersed in this liquid to control the functioning of the air-blowing equipment.

9. Installation according to Claim 8, characterised in that the separator (8) is of the sieve type (9) having a mesh passage of about 500 microns, this separator having a liquid outlet connected to the oxygenation tank (11) and being associated with a storage area (10) adapted to receive the solid part, this storage area (10) being connected to the oxygenation tank (11) to send the drained liquid thereto.

10. Installation according to Claim 8, characterised in that the covered tank (11) is covered at least partly with the aid of transparent material (15) enabling solar heat to be recovered.

## Patentansprüche

1. Verfahren zur Behandlung von Schweinejauche, bei dem man der natürlichen Jauche ein kalkiges Verbesserungsmittel zufügt, die Mischung dekantieren läßt und den flüssigen Anteil in ein Oxidationsbecken (11) bringt, um ihn durch Lufteinblasen einer Oxidierung zu unterwerfen, dadurch gekennzeichnet, daß man eine Menge an kalkigem Verbesserungsmittel in der Größenordnung von 100 kg auf 12 m³ natürlicher Jauche zufügt, daß man das Ganze während einer Dauer von 3 bis 6 Tagen in einem Dekantierbecken (4) ablagern läßt, daß man den flüssigen Anteil vom festen Anteil abtrennt, daß man den flüssigen Anteil in das Oxidationsbecken (11) bringt, wo main ihn einer Verdampfung von etwa 40% seines ursprünglichen Volumens unterzieht, und daß man den festen Anteil auf einer Lagerfläche (10) ablagern läßt, worauf die beiden Anteile als Dünger verwendbar sind.

2. Verfahren nach Anspruch 1, dadurch gekennzeichnet, daß man nach einer Dekantierungsdauer von 4 Tagen den flüssigen und den festen Anteil durch Abpumpen aus dem Dekantierbecken (4) abzieht, wobei man mit der obenauf schwimmenden Flüssigkeit beginnt, und daß man die beiden Anteile trennt, indem man den abgepumpten Stoff in eine Trennvorrichtung (8) gibt, die Maschen im Bereich von 400—700 Micron aufweist.

3. Verfahren nach Anspruch 2, dadurch gekennzeichnet, daß man Maschen von 500 Micron verwendet.

4. Verfahren nach Anspruch 3, dadurch gekennzeichnet, daß man die von der Lagerfläche (10) abfließende Flüssigkeit aufsammelt und in das Oxidationsbecken (11) einbringt.

5. Verfahren nach Anspruch 1, dadurch gekennzeichnet, daß man den festen und den flüssigen Anteil durch Abpumpen aus dem Dekantierbecken (4) abzieht, wobei man mit der obenauf schwimmenden Flüssigkeit beginnt, und daß man die Trennung der Flüssigkeit und der Feststoffe dadurch vollzieht, daß man das Ganze auf der Lagerfläche (10) absetzt, von wo man die abströmende Flüssigkeit aufsammelt, um sie in das Oxidationsbecken (11) zu bringen.

6. Verfahren nach einem der Ansprüche 1 bis 5, dadurch gekennzeichnet, daß man als kalkiges Verbesserungsmittel Kalziumkarbonat verwendet.

7. Verfahren nach Anspruch 1, dadurch gekennzeichnet, daß man den flüssigen Anteil unter der Steuerung von in die Flüssigkeit eintauchenden Ammoniakgasdetektoren (14) oxidiert.

8. Einrichtung zur Durchführung des Verfahrens nach einem der ansprüche 1 bis 4, 6 und 7, dadurch gekennzeichnet, daß sie umfaßt: eine erste Grube (3) zur Vermischung von Jauche mit kalkigem Verbesserungsmittel, eine Doppelgrube (4) zur Ausflockung und Dekantierung, eine Trennvorrichtung (8) für Flüssigkeit und Feststoffe, die abwechselnd aus der einen oder anderen Hälfte (4a, 4b) der Doppelgrube (4) speisbar ist, eine Lagerfläche (10) zur Aufnahme des aus der Trennvorrichtung (8) stammenden, festen Anteils, ein abgedecktes Oxidationsbecken (11) mit regelbaren Verdampfungsöffnungen (17), eine Vorrichtung (12, 13) zum Einblasen von Luft unter Druck in das Innere der im Becken (11) befindlichen Flüssigkeit eintauchende Ammoniagasdetektoren (14) zur Steuerung des Betriebes der Lufteinblasvorrichtung (12, 13).

9. Einrichtung nach Anspruch 8, dadurch gekennzeichnet, daß die Trennvorrichtung (8) nach Art eines Siebes mit einer Durchlaßweite von etwa 500 Micron ausgebildet ist, daß die Trennvorrichtung (8) einen mit dem Oxidationsbecken (11) verbundenen Flüssigkeitsauslaß aufweist und einem Lagerplatz (10) zur Aufnahme des festen Anteils zugeordnet ist, und daß der Lagerplatz (10) mit dem Oxidationsbecken (11) in Verbindung steht, um abströmende Flüssigkeit dorthin zu leiten.

10. Einrichtung nach Anspruch 8, dadurch gekennzeichnet, daß das abgedeckte Oxidationsbecken (11) wenigstens zum Teil von transparentem Material (15) überdeckt ist, welches die Aufsammlung von Sonnenwärme gestattet.

Fig.1

Fig.2